# EUROPEAN PATENT SPECIFICATION

(11) **EP 4 047 730 B1**
(45) Date of publication and mention of the grant of the patent: **30.08.2023**
(21) Application number: 21157611.1
(22) Date of filing: 17.02.2021
(51) Int. Cl.: H01M 50/207, H01M 50/249, H01M 50/35, H01M 50/358, H01M 10/6555, H01M 10/6556

(54) **BATTERY SYSTEM AND VEHICLE INCLUDING THE BATTERY SYSTEM**
BATTERIESYSTEM UND FAHRZEUG MIT DEM BATTERIESYSTEM
SYSTÈME DE BATTERIE ET VÉHICULE COMPRENANT LE SYSTÈME DE BATTERIE

(43) Date of publication of application: 24.08.2022
(73) Proprietor: Samsung SDI Co., Ltd., Yongin-si, Gyeonggi-do 17084 (KR)
(72) Inventor: Kraberger, Gernot, 8010 Graz (AT); Reinprecht, Wolfgang, 8144 Attendorf (AT); Erhart, Michael, 8054 Seiersberg-Pirka (AT)
(74) Representative: Gulde & Partner

(56) References cited:
- CN-A- 111 969 158
- DE-A1-102017 212 223

## Description

### Field of the Disclosure

The present invention relates to a battery system allowing for a venting gas exhausted in case of a thermal runaway to cool down before leaving the battery system. Further, the present invention relates to a vehicle comprising the battery system.

### Technological Background

In the recent years, vehicles for transportation of goods and peoples have been developed using electric power as a source for motion. Such an electric vehicle is an automobile that is propelled by an electric motor, using energy stored in rechargeable batteries. An electric vehicle may be solely powered by batteries or may be a form of hybrid vehicle powered by for example a gasoline generator. Furthermore, the vehicle may include a combination of electric motor and conventional combustion engine. In general, an electric-vehicle battery, EVB, or traction battery is a battery used to power the propulsion of battery electric vehicles, BEVs. Electric-vehicle batteries differ from starting, lighting, and ignition batteries because they are designed to give power over sustained periods of time. A rechargeable or secondary battery differs from a primary battery in that it can be repeatedly charged and discharged, while the latter provides only an irreversible conversion of chemical to electrical energy. Low-capacity rechargeable batteries are used as power supply for small electronic devices, such as cellular phones, notebook computers and camcorders, while high-capacity rechargeable batteries are used as the power supply for electric and hybrid vehicles and the like.

In general, rechargeable batteries include an electrode assembly including a positive electrode, a negative electrode, and a separator interposed between the positive and negative electrodes, a case receiving the electrode assembly, and an electrode terminal electrically connected to the electrode assembly. An electrolyte solution is injected into the case in order to enable charging and discharging of the battery via an electrochemical reaction of the positive electrode, the negative electrode, and the electrolyte solution. The shape of the case, e.g. cylindrical or rectangular, depends on the battery's intended purpose. Lithium-ion (and similar lithium polymer) batteries, widely known via their use in laptops and consumer electronics, dominate the most recent group of electric vehicles in development.

Rechargeable batteries may be used as a battery module formed of a plurality of unit battery cells coupled in series and/or in parallel so as to provide a high energy content, in particular for motor driving of a hybrid vehicle. That is, the battery module is formed by interconnecting the electrode terminals of the plurality of unit battery cells depending on a required amount of power and in order to realize a high-power rechargeable battery.

Battery modules can be constructed either in block design or in modular design. In block designs each battery is coupled to a common current collector structure and a common battery management system and the unit thereof is arranged in a housing. In modular designs, pluralities of battery cells are connected to form submodules and several submodules are connected to form the battery module. In automotive applications, battery systems often consist of a plurality of battery modules connected in series for providing a desired voltage. Therein, the battery modules may comprise submodules with a plurality of stacked battery cells, each stack comprising cells connected in parallel that are connected in series (*XpYs*) or multiple cells connected in series that are connected in parallel (*XsYp*)*.*

A battery pack is a set of any number of (preferably identical) battery modules. They may be configured in a series, parallel or a mixture of both to deliver the desired voltage, capacity, or power density. Components of battery packs include the individual battery modules, and the interconnects, which provide electrical conductivity between them.

Battery systems according to the prior art, despite any modular structure, usually comprise a battery housing that serves as enclosure to seal the battery system against the environment and provides structural protection of the battery system's components. Housed battery systems are usually mounted as a whole into their application environment, e.g. an electric vehicle.

To provide thermal control of the enclosed battery cells within the battery housing a thermal management system may be used to efficiently emit, discharge and/or dissipate heat generated within the battery housing. In certain conditions of the battery cells an increase of the internal temperature can lead to abnormal reactions occurring in the battery cells. An example of such abnormal operation conditions is a thermal runaway in a battery cell that may be entered by a strongly overheated or overcharged cell. The thermal runaway is a self-accelerating chemical reaction inside the battery cell, which produces high amounts of heat and venting gas, until nearly all available material is exhausted. The exhausted material, i.e. the venting products, may comprise hot and toxic venting gas as well as potentially conductive solid material, like graphite powder and metal fragments.

The temperature of the venting products, in particular of the venting gas, can reach temperatures of 1000°C or even higher, in particular when several battery cells go into thermal runaway at the same time or within a short time span. The temperature of the venting products is usually still very high when leaving the battery system through the system venting element to the environment. This presents a danger for bystanders as the hot venting products may cause burns and may ignite causing a fire.

A state of the art venting concept of a battery system is to let the hot venting products of a battery cell in thermal runaway condition expand into the battery housing and exit the battery system through a system venting element to the environment of the battery housing. As the venting products escape the battery system the pressure inside the battery system can be kept in a safe range. The system venting element can e.g. be dimensioned according to ISO4126-6.

From DE 10 2017 212 223 A1 a battery system is known where the venting products in case of a thermal runaway exit the battery cells at the bottom through a cooling plate directly into a channel, wherein a cooling fluid is inserted via the cooling plate into the battery cells.

It is thus an object of the present disclosure to overcome or reduce at least some of the drawbacks of the prior art and to provide a battery system that minimizes the danger of burns and fire, in particular in a simple and cost efficient manner.

### Summary of Invention

Embodiments of the present disclosure seek to solve at least one of the problems existing in the prior art to at least some extent.

In particular, a battery system for a (electric) vehicle is provided comprising a plurality of battery cells and a battery housing enclosing the plurality of battery cells in a cell chamber. The battery cells comprise a venting side with venting exits through which venting products exit the battery cells in case of a thermal runaway and a cooling side opposite the venting side in thermal connection with a first side of a cooling plate. The battery system further comprises a guiding channel, formed between a second side of the cooling plate opposite the first side and a channel wall facing the second side of the cooling plate, and a passage connecting the cell chamber with the guiding channel. The battery system is adapted such that in case of a thermal runaway the venting products leaving the battery cells at the venting side into the cell chamber are directed along a venting path from the cell chamber through the passage into the guiding channel, through the guiding channel and via a system exit to an environment of the battery system.

The battery housing encloses the battery cells. The battery cells may be arranged to form modules, as explained above. The battery cells comprise at one end a venting side which in an installation setting of the battery system in an electric vehicle may be considered the upper side of the battery cells. At an opposite end, the battery cells comprise a cooling side which in said installation setting may be the lower side of the battery cells. The battery cells are in thermal contact with a cooling plate via the cooling side so as to transfer excess thermal energy to the cooling plate. The cooling side of the battery cells may be in direct or indirect contact with the first side of the cooling plate. On the second side of the cooling plate opposite to the first side the guiding channel is arranged. In other words, on one side of the cooling plate the cell chamber comprising the battery cells is arranged and on the other side of the cooling plate the guiding channel is arranged. The cooling plate delimits the cell chamber from the guiding channel. According to the invention, however, a passage is provided connecting the cell chamber with the guiding channel so that venting products may pass from the cell chamber into the guiding channel. The guiding channel may extend from the passage to the system exit. Thus, the passage may be considered the inlet of the guiding channel and the system exit the outlet of the guiding channel. The system exit may comprise an opening towards the exterior of the battery system, preferably with a venting valve.

With the battery system according to the invention the venting products of a thermal runaway leave the battery cells at the venting side into the cell chamber, flow along a venting path from the cell chamber through the passage into the guiding channel and through at least a part of the guiding channel via a system exit to an environment of the battery system. The inventive battery system is thus designed so that the venting products exiting the battery cells during a thermal runaway do not leave the battery system via a shortest route, but rather on detours. With respect to prior art battery systems, the venting path the venting products have to take from the battery cells to the environment of the battery system is longer so that the venting products may pass more thermal energy to the inside parts of the battery system. In particular, a large amount of thermal energy is transferred from the venting products to the cooling plate and the channel wall which delimit the guiding channel.

The venting path is increased over the battery system of DE 10 2017 212 223 A1 in particular, because the venting products exit the battery cells not through the cooling plate, but rather into the cell chamber, preferably towards a top cover of the battery housing, and via the passage into the guiding channel. In other words, the venting products are exhausted by the battery cells in a direction away from the cooling plate, in particular not directly through the cooling plate. Thus, the venting path is increased over the battery system of DE 10 2017 212 223 A1. Also, the battery system of the invention requires no additional elements needed for cooling, in particular no cooling gas or fluid has to be injected.

The proposed venting geometry leads to a sufficient cool-down of the venting products before exiting the battery system towards the environment so that the danger of burns and fires is minimized. In particular, the venting products exiting the battery system of the invention towards the environment are at lower temperature than with known battery systems. The proposed arrangement of the discussed parts of the battery system is easy to achieve at virtually no added cost with respect to known designs.

The battery housing may enclose the cooling plate and/or the guiding channel as well. The battery housing may comprise a top cover facing the venting side of the battery cells and a bottom cover opposite the top cover. The cell chamber may be delimited by the top cover and the first side of the cooling plate. The channel wall delimiting the guiding channel may be formed by the bottom cover of the battery housing. In particular, in said installation setting, the bottom cover may be part of an underbody of the battery housing. Thus, in a preferred embodiment, the battery system is adapted such that in case of a thermal runaway the venting products exit the battery cells at the venting side towards the top cover of the housing which faces the venting side, the venting products thus flowing into the cell chamber. Further, the venting products according to this preferred embodiment are directed along the venting path from the cell chamber through the passage into the guiding channel (thereby leaving the cell chamber), the guiding channel being arranged below the cooling plate on the opposite side of the battery cells, and through at least a part of the guiding channel along the cooling plate and the bottom cover/underbody to an environment of the battery system. In other words, the venting products, i.e. the vented gas and any particles it may comprise, are vented in case of a thermal runaway through the underbody of the battery in order to cool the venting products and allow for a safe venting to an environment of the battery system.

According to an embodiment the passage is arranged at one end of the cooling plate and the system exit is arranged at an opposite end of the cooling plate so that the guiding channel extends from the one end of the cooling plate to the opposite end of the cooling plate. As a consequence, the guiding channel stretching from the passage to the system exit extends along the whole length of the cooling plate, i.e. along the complete second side of cooling plate. The venting path is therefore particularly long so that a larger amount of thermal energy of the venting products may be transferred to the cooling plate and the channel wall which form the guiding channel. This results in the venting products being cooled down further before exiting the battery system and therefore to a further increase in safety. The passage may lead from the cell chamber to the guiding channel past one end of the cooling plate. In particular, the passage may be arranged between an end of the cooling plate and a sidewall member of the battery housing facing said end of the cooling plate. In another embodiment, however, the passage may be formed as a through-hole in the cooling plate. Preferably, the passage is the only connection between the cell chamber and the guiding channel allowing venting products to pass from the cell chamber into the guiding channel. This ensures that the venting products can take only the predetermined venting path via the passage through the guiding channel.

According to an embodiment the system exit is arranged in a sidewall member of the battery housing. The sidewall member may connect the bottom cover and the top cover of the battery housing and may delimit the cell chamber and/or the guiding channel to the sides. An exit channel may be arranged inside the sidewall member, wherein the sidewall member may comprise an aperture connecting the guiding channel with the exit channel. In particular, the battery housing may comprise a first sidewall member and a second sidewall member opposite the first sidewall member. More specifically, the battery housing may comprise a first sidewall member connecting the bottom cover and the top cover of the battery housing at one end and a second sidewall member connecting the bottom cover and the top cover of the battery housing at an opposite end. The top cover, bottom cover and first and second sidewall members may enclose the cell chamber and/or the guiding channel. The system exit may be arranged in one of the first and second sidewall members. In particular, the system exit may be arranged in the one of the first and second sidewall members which leads to the venting path being the longest. For example, the passage may be arranged at or near the first sidewall member and the system exit in the second sidewall member. Such an arrangement leads to a particularly long guiding channel and therefore a long venting path and a better cool down of the venting products.

According to another embodiment the system exit is arranged in the channel wall. Thus, in contrast to arranging the system exit in a sidewall member, the system exit may be arranged directly in the channel wall. In particular in this case, the channel wall may be formed by the bottom cover or underbody of the battery housing. The venting products then exit the battery system downwards with respect to an installation position in a direction to an underground the vehicle stands or drives on. The venting process is then particularly safe for bystanders, because even if the temperature of the venting products exiting the system exit to the environment of the vehicle should be still relatively high, it is unlikely that any bystanders will come in contact with them. Although arranged in the channel wall the system exit is preferably at a distance as large as possible from the passage, i.e. the inlet of the guiding channel. The longer the guiding channel, the more the venting products can cool down by transferring thermal energy to the channel wall and the cooling plate as explained above. Therefore, the passage may be arranged near one end of the cooling plate and the system exit may be arranged in the channel wall near an opposite end of the cooling plate. The system exit may be arranged in the channel wall near a side wall member of the battery housing. In particular, the passage may be arranged near a first sidewall member and the system exit near a second sidewall member opposite the first sidewall member.

According to another aspect of the present disclosure, a vehicle including a battery module as defined above is provided. The battery system is preferably integrated into an underbody construction of the vehicle which allows the battery system to have a substantially flat shape. The vehicle is advantageous as in case of a thermal runaway venting products exiting the battery system towards an environment of the vehicle are cooled down substantially. Thereby any danger to bystanders is reduced or prevented.

Further aspects of the present disclosure could be learned from the dependent claims or the following description.

### Brief Description of the Drawings

Features will become apparent to those of ordinary skill in the art by describing in detail exemplary embodiments with reference to the attached drawings in which:

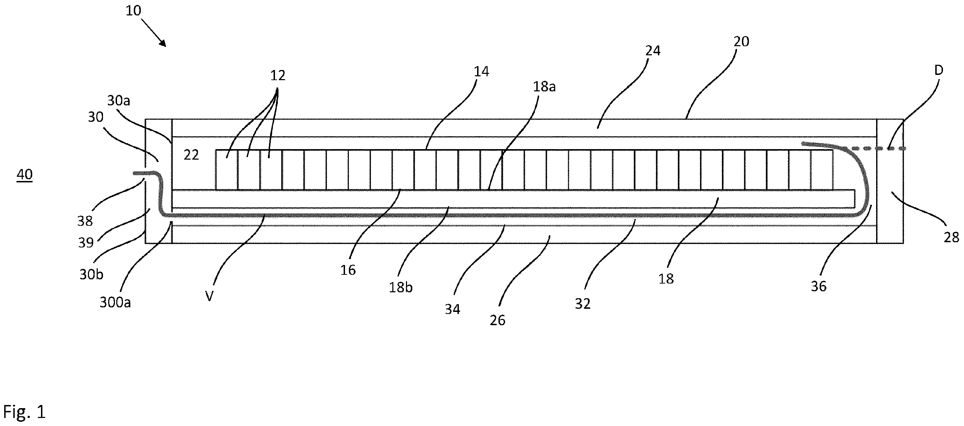

Fig. 1 illustrates a schematic side view of a battery system according to an embodiment.

### Detailed Description of the invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art.

Accordingly, processes, elements, and techniques that are not considered necessary to those having ordinary skill in the art for a complete understanding of the aspects and features of the present disclosure may not be described. In the drawings, the relative sizes of elements, layers, and regions may be exaggerated for clarity.

As used herein, the term "and/or" includes any and all combinations of one or more of the associated listed items. Further, the use of "may" when describing embodiments of the present disclosure refers to "one or more embodiments of the present disclosure." In the following description of embodiments of the present disclosure, the terms of a singular form may include plural forms unless the context clearly indicates otherwise.

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present disclosure. As used herein, the term "and/or" includes any and all combinations of one or more of the associated listed items. Expressions such as "at least one of," when preceding a list of elements, modify the entire list of elements and do not modify the individual elements of the list.

As used herein, the term "substantially," "about," and similar terms are used as terms of approximation and not as terms of degree, and are intended to account for the inherent deviations in measured or calculated values that would be recognized by those of ordinary skill in the art. Further, if the term "substantially" is used in combination with a feature that could be expressed using a numeric value, the term "substantially" denotes a range of +/- 5% of the value centered on the value.

It will be further understood that the terms "include," "comprise," "including," or "comprising" specify a property, a region, a fixed number, a step, a process, an element, a component, and a combination thereof but do not exclude other properties, regions, fixed numbers, steps, processes, elements, components, and combinations thereof.

It will also be understood that when an element is referred to as being "above" or "on" another element, it can be directly on the other element, or intervening elements may also be present.

Herein, the terms "top" and "bottom" are defined according to the z-axis. For example, the top cover is positioned at the upper part of the z-axis, whereas the bottom cover is positioned at the lower part thereof. In the drawings, the sizes of elements may be exaggerated for clarity. For example, in the drawings, the size or thickness of each element may be arbitrarily shown for illustrative purposes, and thus the embodiments of the present disclosure should not be construed as being limited thereto.

In the following description of embodiments of the present disclosure, the terms of a singular form may include plural forms unless the context clearly indicates otherwise.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

The figure shows an embodiment of a battery system 10 for an electric vehicle according to the invention, comprising a plurality of battery cells 12 and a battery housing 20. For better readability, not all of the battery cells 12 in the figure are marked with reference signs. The battery cells 12 are arranged in a row and may form one or more battery modules. The battery cells 12 comprise a venting side 14 at a first end, which may be regarded as an upper side, and a cooling side 16 opposite the venting side 14 at a second end, the cooling side 16 may be regarded as an lower side. The venting side 14 comprises venting exits (not shown) through which venting products, comprising venting gas and/or particles, may exit the battery cells 12 in case of a thermal runaway. The cooling side 16 is arranged on top of a cooling plate 18 and is in thermal connection with the cooling plate 18, the cooling side 16 of the battery cells facing a first side 18a of the cooling plate 18.

The battery housing 20 comprises a top cover 24, a bottom cover 26 opposite the top cover 24, and first and second sidewall members 28, 30 connecting the bottom cover 26 and the top cover 24 of the battery housing 20. The battery housing 20 with its top cover 24, bottom cover 26, and the first and second sidewall members 28, 30 forms an enclosure in which the battery cells 12 are arranged together with the cooling plate 18. Thus, the battery housing 20, together with the cooling plate 18, encloses the plurality of battery cells 12 in a cell chamber 22 which in the figure may be regarded as an upper chamber. The battery system 10 further comprises a guiding channel 32 which is formed between a second side 18b of the cooling plate 18, arranged opposite the first side 18a, and a channel wall 34 facing the second side 18b of the cooling plate 18 and which may be regarded as a lower chamber. The channel wall 34 is part of the bottom cover 26 which in this embodiment forms an underbody of the battery housing. In other words, the battery cells 12 are arranged on top of the cooling plate 18 while the guiding channel 32 is arranged below the cooling plate 18. The cooling plate 18 at its left side end is connected to the second sidewall member 30 and extends from the second sidewall member 30 towards the first sidewall member 28, wherein a passage 36 is arranged between the right side end of the cooling plate 18 and the first sidewall member 28 facing said right side end of the cooling plate 18. The passage 36 connects the cell chamber 22 with the guiding channel 32.

Thus, the cooling plate 18 divides the enclosure formed by the battery housing 20 into two chambers, the cell chamber 22 above the cooling plate 18 as an upper chamber comprising the battery cells and the guiding channel 32 as a lower chamber below the cooling plate 18. The passage 36 is the only connection between the cell chamber 22 and the guiding channel 32 that allows for venting products leaving the cells 12 to pass over to the guiding channel 32. Due to this arrangement the venting products, which leave the battery cells 12 at the venting side 14 into the cell chamber 22 towards the top cover 24, are directed along a venting path V from the cell chamber 22 through the passage 36 into the guiding channel 32, through the guiding channel 32 via a system exit 38 to an environment 40 of the battery system 10.

Top cover 24, bottom cover 26, and the first and second sidewall members 28, 30 are in this embodiment designed as double profile structures comprising inner walls facing an inside of the battery system and outer walls opposite the inner walls facing an outside of the battery system. Such profile structures provide structural stiffness to the battery housing. The channel wall 34, for example, can be considered the inner wall of the bottom cover 26. The second sidewall member 30 comprises an inner wall 30a facing the cell chamber 22 and the guiding channel 32 and an opposite outer wall 30b, wherein an exit channel 39 is arranged inside the second sidewall member 30 delimited by the inner wall 30a and the outer wall 30b. A hole 300a is arranged at a lower portion of the inner wall 30a. Thus, the guiding channel 32 and the exit channel 39 are connected each other via the hole 300a. The system exit 38 is arranged in the outer wall 30b of the second sidewall member 30. The system exit 38 may comprise a venting element, like a venting valve. However, the top cover, the bottom cover, and the first and second sidewall members do not necessarily need to be double profile structures. Instead, one or more, in particular all of these elements could be sheet metals or extrusion profiles. In general, the top cover, the bottom cover, and the first and second sidewall members may be, in any combination, from the group of: double profile structures, extrusion profiles, sheet metal. For example, the top cover and the bottom cover may be sheet metal while the first and second sidewall members are double profile structures or extrusion profiles.

In a conventional battery system design the system exit would be arranged e.g. in the first sidewall member 28 so that venting products, in particular venting gas, exiting one or more battery cells 12 in case of a thermal runaway would exit the battery system 10 via the dotted line D seen in the figure. These venting products would exit the battery system at that point at a potentially very high temperature, in particular when multiple cells vent at the same time or within a short timespan. The hot venting products may propose a danger to bystanders as they may cause burns. Also, the venting products may ignite due to the high temperature.

With the battery system design of the invention, however, the venting products exiting the battery cells during a thermal runaway do not leave the battery system via such a short route, but rather on a detour. As explained above, the venting products are directed along the venting path V from the cell chamber 22 through the passage 36 into the guiding channel 32, through the guiding channel 32 and via the system exit 38 at the second sidewall member 30 to the environment 40 of the battery system. In other words, the venting products flow from the cell chamber 22 via the passage 36 into the guiding channel 32 towards an underbody of the battery system 10 below the cooling plate 18. The venting products then flow along the guiding channel 32 between the cooling plate 18 and the bottom cover 26 and its channel wall 34 as an underbody or underbody protection into the exit channel 39 as a hollow profile of the second sidewall member 30 and through the system exit 38 to the outside of the battery system 10.

With respect to prior art battery systems the venting path the venting products have to take from the battery cells to the environment of the battery system is longer so that the venting products may pass more thermal energy to the inside parts of the battery system. In particular, a large amount of thermal energy is transferred from the venting products to the cooling plate and the channel wall which delimit the guiding channel. The proposed venting geometry thus leads to a sufficient cool-down of the venting products before exiting the battery system towards the environment so that the danger of burns and combustion of the gas on the outside (when it comes into contact with oxygen) is minimized. In particular, the venting products exiting the battery system of the invention towards the environment are at lower temperature than with known battery systems. The proposed arrangement of the discussed parts of the battery system is easy to achieve at virtually no added cost with respect to known designs.

The venting path of the battery system as shown in the figure is particularly long as the guiding channel extends all the way from the first sidewall member 28 to the second sidewall member 30, in other words from one end of the cooling plate 18 to the opposite end of the cooling plate 18, along the whole length of cooling plate 18. The venting products may thus pass a large amount of thermal energy to the cooling plate 18 and/or the channel wall 34 resulting in a significant cool down of the venting products. The system exit, however, may be arranged at another place, e.g. in the bottom cover 26. The venting products would then leave the battery system downwards through the underbody. The main point is that the venting products have to cross a significant portion of the volume between the channel wall 34 of the bottom cover 26 and the cooling plate 28.

### Reference signs

- 10: battery system
- 12: battery cells
- 14: venting side of the battery cells
- 16: cooling side of the battery cells
- 18: cooling plate
- 18a: first side of cooling plate
- 18b: second side of cooling plate
- 20: battery housing
- 22: cell chamber
- 24: top cover
- 26: bottom cover
- 28: first sidewall member
- 30: second sidewall member
- 30a: inner wall of second sidewall member
- 30b: outer wall of second sidewall member
- 32: guiding channel
- 34: channel wall
- 36: passage
- 38: system exit
- 39: exit channel
- 300a: hole

- D: dotted line
- V: venting path

## Claims

1. A battery system (10), comprising a plurality of battery cells (12) and a battery housing (20) enclosing the battery cells (12) in a cell chamber (22), wherein the battery cells (12) comprise a venting side (14) with venting exits through which venting products exit the battery cells (12) in case of a thermal runaway and a cooling side (16) opposite the venting side (14) in thermal connection with a first side (18a) of a cooling plate (18), the battery system (10) further comprising a guiding channel (32), formed between a second side (18b) of the cooling plate (18) opposite the first side (18a) and a channel wall (34) facing the second side (18b) of the cooling plate (18), and a passage (36) connecting the cell chamber (22) with the guiding channel (32), wherein the battery system (10) is adapted such that in case of a thermal runaway the venting products leaving the battery cells (12) at the venting side (14) into the cell chamber (22) are directed along a venting path (V) from the cell chamber (22) through the passage (36) into the guiding channel (32), through the guiding channel (32) and via a system exit (38) to an environment (40) of the battery system (10).

2. The battery system (10) of claim 1, wherein the passage (36) is arranged at one end of the cooling plate (18) and the system exit (38) is arranged at an opposite end of the cooling plate (18) so that the guiding channel (32) extends from the one end of the cooling plate (18) to the opposite end of the cooling plate (18).

3. The battery system (10) of claim 1 or 2, wherein system exit (38) is arranged in a sidewall member (30) of the battery housing (20).

4. The battery system (10) of claim 3, wherein the battery housing (20) comprises a first sidewall member (28) and a second sidewall member (30) opposite the first sidewall member (28), wherein the passage (36) is arranged at or near the first sidewall member (28) and the system exit (38) is arranged in the second sidewall member (30).

5. The battery system (10) of claim 1 or 2, wherein the system exit (38) is arranged in the channel wall (34).

6. The battery system (10) of any of the preceding claims, wherein the battery housing (20) comprises a top cover (24) facing the venting side (14) of the battery cells (12), wherein the cell chamber (22) is delimited by the top cover (26) and the first side (18a) of the cooling plate (18).

7. The battery system (10) of any one of the preceding claims, wherein the battery housing (20) comprises a bottom cover (26) opposite the top cover (24) forming the channel wall (34).

8. The battery system (10) of claim 7, wherein the bottom cover (26) is part of an underbody of the battery housing (20).

9. An electric vehicle including a battery system (10) according to any one of the preceding claims.

## Patentansprüche

1. Batteriesystem (10), umfassend eine Vielzahl von Batteriezellen (12) und ein Batteriegehäuse (20), das die Batteriezellen (12) in einer Zellkammer (22) umschließt, wobei die Batteriezellen (12) eine Entlüftungsseite (14) mit Entlüftungsausgängen, durch die Entlüftungsprodukte die Batteriezellen (12) im Falle eines thermischen Durchgehens verlassen, und eine der Entlüftungsseite (14) gegenüberliegende Kühlseite (16) in thermischer Verbindung mit einer ersten Seite (18a) einer Kühlplatte (18) umfassen, wobei das Batteriesystem (10) ferner einen Führungskanal (32), der zwischen einer zweiten Seite (18b) der Kühlplatte (18) gegenüber der ersten Seite (18a) und einer Kanalwand (34) ausgebildet ist, die der zweiten Seite (18b) der Kühlplatte (18) zugewandt ist, und einen Durchgang (36), der die Zellkammer (22) mit dem Führungskanal (32) verbindet, umfasst, wobei das Batteriesystem (10) so angepasst ist, dass im Falle eines thermischen Durchgehens die Entlüftungsprodukte, die die Batteriezellen (12) an der Entlüftungsseite (14) in die Zellkammer (22) verlassen, entlang eines Entlüftungspfads (V) von der Zellkammer (22) durch den Durchgang (36) in den Führungskanal (32), durch den Führungskanal (32) und über einen Systemausgang (38) zu einer Umgebung (40) des Batteriesystems (10) geleitet werden.

2. Batteriesystem (10) nach Anspruch 1, wobei der Durchgang (36) an einem Ende der Kühlplatte (18) angeordnet ist und der Systemausgang (38) an einem gegenüberliegenden Ende der Kühlplatte (18) angeordnet ist, so dass sich der Führungskanal (32) von dem einen Ende der Kühlplatte (18) zu dem gegenüberliegenden Ende der Kühlplatte (18) erstreckt.

3. Batteriesystem (10) nach Anspruch 1 oder 2, wobei der Systemausgang (38) in einem Seitenwandelement (30) des Batteriegehäuses (20) angeordnet ist.

4. Batteriesystem (10) nach Anspruch 3, wobei das Batteriegehäuse (20) ein erstes Seitenwandelement (28) und ein dem ersten Seitenwandelement (28) gegenüberliegendes zweites Seitenwandelement (30) umfasst, wobei der Durchgang (36) am oder in der Nähe des ersten Seitenwandelements (28) angeordnet ist und der Systemausgang (38) im zweiten Seitenwandelement (30) angeordnet ist.

5. Batteriesystem (10) nach Anspruch 1 oder 2, wobei der Systemausgang (38) in der Kanalwand (34) angeordnet ist.

6. Batteriesystem (10) nach einem der vorhergehenden Ansprüche, wobei das Batteriegehäuse (20) eine obere Abdeckung (24) aufweist, die der Entlüftungsseite (14) der Batteriezellen (12) zugewandt ist, wobei die Zellkammer (22) durch die obere Abdeckung (26) und die erste Seite (18a) der Kühlplatte (18) begrenzt ist.

7. Batteriesystem (10) nach einem der vorhergehenden Ansprüche, wobei das Batteriegehäuse (20) eine untere Abdeckung (26) gegenüber der oberen Abdeckung (24) aufweist, die die Kanalwand (34) bildet.

8. Batteriesystem (10) nach Anspruch 7, wobei die untere Abdeckung (26) Teil eines Unterbodens des Batteriegehäuses (20) ist.

9. Elektrisches Fahrzeug, umfassend ein Batteriesystem (10) nach einem der vorhergehenden Ansprüche.

## Revendications

1. Système de batterie (10), comprenant une pluralité de cellules de batterie (12) et un boîtier de batterie (20) renfermant les cellules de batterie (12) dans une chambre de cellules (22), dans lequel les cellules de batterie (12) comprennent un côté d'évacuation (14) avec des sorties d'évacuation à travers lesquelles les produits d'évacuation sortent des cellules de batterie (12) en cas d'emballement thermique et un côté de refroidissement (16) opposé au côté d'évacuation (14) en liaison thermique avec un premier côté (18a) d'une plaque de refroidissement (18), le système de batterie (10) comprenant en outre un canal de guidage (32), formé entre un second côté (18b) de la plaque de refroidissement (18) opposé au premier côté (18a) et une paroi de canal (34) faisant face au second côté (18b) de la plaque de refroidissement (18), et un passage (36) reliant la chambre de cellule (22) au canal de guidage (32), dans lequel le système de batterie (10) est adapté de sorte qu'en cas d'emballement thermique les produits d'évacuation quittant les cellules de batterie (12) au niveau du côté d'évacuation (14) dans la chambre de cellule (22) soient dirigés le long d'une voie d'évacuation (V) depuis la chambre de cellule (22) à travers le passage (36) dans le canal de guidage (32), à travers le canal de guidage (32) et via une sortie de système (38) vers un environnement (40) du système de batterie (10).

2. Système de batterie (10) selon la revendication 1, dans lequel le passage (36) est disposé à une extrémité de la plaque de refroidissement (18) et la sortie de système (38) est disposée à une extrémité opposée de la plaque de refroidissement (18) de sorte que le canal de guidage (32) s'étende d'une extrémité de la plaque de refroidissement (18) à l'extrémité opposée de la plaque de refroidissement (18).

3. Système de batterie (10) selon la revendication 1 ou 2, dans lequel la sortie de système (38) est disposée dans un élément de paroi latérale (30) du boîtier de batterie (20) .

4. Système de batterie (10) selon la revendication 3, dans lequel le boîtier de batterie (20) comprend un premier élément de paroi latérale (28) et un second élément de paroi latérale (30) opposé au premier élément de paroi latérale (28), dans lequel le passage (36) est disposé au niveau ou à proximité du premier élément de paroi latérale (28) et la sortie de système (38) est disposée dans le second élément de paroi latérale (30).

5. Système de batterie (10) selon la revendication 1 ou 2, dans lequel la sortie de système (38) est disposée dans la paroi de canal (34).

6. Système de batterie (10) selon l'une quelconque des revendications précédentes, dans lequel le boîtier de batterie (20) comprend un couvercle supérieur (24) faisant face au côté d'évacuation (14) des cellules de batterie (12), dans lequel la chambre de cellule (22) est délimitée par le couvercle supérieur (26) et le premier côté (18a) de la plaque de refroidissement (18).

7. Système de batterie (10) selon l'une quelconque des revendications précédentes, dans lequel le boîtier de batterie (20) comprend un couvercle inférieur (26) opposé au couvercle supérieur (24) formant la paroi de canal (34).

8. Système de batterie (10) selon la revendication 7, dans lequel le couvercle inférieur (26) fait partie d'un soubassement du boîtier de batterie (20).

9. Véhicule électrique comportant un système de batterie (10) selon l'une quelconque des revendications précédentes.
